# EUROPEAN PATENT SPECIFICATION

(11) **EP 3 385 230 B1**
(45) Date of publication and mention of the grant of the patent: **04.03.2020**
(21) Application number: 18165800.6
(22) Date of filing: 04.04.2018
(51) Int. Cl.: C02F 1/24, C02F 1/42, C02F 1/44, C02F 1/52, C02F 1/56, C02F 1/78, C02F 9/00, C02F 11/12, C02F 11/14, C02F 103/06

(54) **PROCESS OF EXTRACTING AND PURIFYING HUMIC SUBSTANCES FROM SANITARY LANDFILL LEACHATE**
VERFAHREN ZUR EXTRAKTION UND REINIGUNG VON HUMINSTOFFEN IN DEPONIESICKERWASSER
PROCESSUS D'EXTRACTION ET DE PURIFICATION DE SUBSTANCES HUMIQUES DANS DES LIXIVIATS D'ENFOUISSEMENT SANITAIRE

(30) Priority: 04.04.2017 BR 10201706908
(43) Date of publication of application: 10.10.2018
(73) Proprietor: Kudrjawzew, Vladimir, CEP 05351-025 Sao Paulo (BR)
(72) Inventor: Kudrjawzew, Vladimir, CEP 05351-025 Sao Paulo (BR)
(74) Representative: Lourenço Martinho do Rosário, Ana Margarida

(56) References cited:
- CN-B- 102 443 178
- A.C. SILVA ET AL: "Treatment and detoxification of a sanitary landfill leachate", CHEMOSPHERE., vol. 55, no. 2, 1 April 2004 (2004-04-01), pages 207-214, XP055478622, GB ISSN: 0045-6535, DOI: 10.1016/j.chemosphere.2003.10.013
- DENG ET AL: "Electrochemical oxidation for landfill leachate treatment", WASTE MANAGEM, ELSEVIER, NEW YORK, NY, US, vol. 27, no. 3, 12 January 2007 (2007-01-12), pages 380-388, XP005827869, ISSN: 0956-053X

## Description

### SCOPE OF THE INVENTION

The present patent of invention for the process of extracting and purifying humic substances from sanitary landfill leachate withdraws the dirt present in the slurry to enable the extraction of the humic substances and the treated effluent (water) that complies with environmental legislation for disposal or re-use.

### BACKGROUND OF THE INVENTION

The humic substances are humins and fulvin monomers thereof, particularly humic acids and fulvic acids, product of the biological degradation of organic vegetable matter, act as soil conditioners retaining the humidity, facilitate plant absorption of nutrients, have major ionic exchange and metal chelation capacity and the fulvic acids are metabolized by the plant positively influencing the Krebs Cycle and facilitating photosynthesis.

The main form of obtaining humic substances is by way of turf which is a partially degraded vegetable substance formed mainly of sphagnum and hypnum, presented in the form of layers, the liquid turf has large amounts of carbon, which limits its application in agriculture; the demand for humic substances is enormous due to the benefits for farmable soil and for crops; the anaerobic degradation of any organic vegetable matter produces humic substances; the landfill leachate (slurry) is produced from the degradation of the solid urban residues and whose composition presents at least 40% in organic vegetable matter; the humic substances are found in the slurry of landfills in high concentrations and the existing processes for treating slurry do not enable the extraction of these substances.

### SUMMARY OF THE INVENTION

Bearing in mind these difficulties and in order to overcome them, the process was developed to extract and purify humic substances from sanitary landfill leachate, divided into four consecutive steps, 1^{st} physical-chemical step of coagulation and flocculation of the suspended solids, whose withdrawn solid is an encapsulated metal chelate other than leachate, classified as CLASS II B; 2^{nd} filtration step, comprising sand filter (5), microfiltration (8) and nanofiltration, whose the retained part is concentrated in humic substances; the 3^{rd} step of purification of the humic substances; and 4^{th} step of treatment of the permeated effluent to obtain water for re-use.

### BRIEF DESCRIPTION OF THE DRAWINGS

The drawings illustrate the equipment involved in the steps of the process of extracting and purifying humic substances from sanitary landfill leachate, the object of the present patent, the drawings being illustrations that contribute to an improved understanding of the present specification, wherein:
Figure 1 illustrates the equipment involved in the 1^{st} physical-chemical step;
Figure 2 illustrates the equipment involved in the 2^{nd} step of filtration;
Figure 3 illustrates the equipment involved in the 3^{rd} step of purifying the humic substances;
Figure 4 illustrates the equipment involved in the 4^{th} step of treating the effluent for obtaining re-usable water.

### DETAILED DESCRIPTION OF THE INVENTION

The 1^{st} physical-chemical step takes place in a physical-chemical reactor (1), endowed with stirrer (2) and which uses the property of chelation of the humins present in the slurry; the slurry is pumped from the slurry pond to the physical-chemical reactor (1) until it occupies 60% of the volume thereof, adding 0.35% to 0.70%, in volume of such reactor, of FeCl₃ (ferric chloride), to be defined by jar-test; Fe³⁺ chelates the humins forming organo-metals which by allosteric effect causes the chelation of other metals present in the slurry and co-adsorption to amine groups forming the clot, FeCl₃ acidifies the medium which decomposes the carbonates (CO₃²⁻ ) present, with a large release of carbon gas (CO₂), which causes the formation of a foam that occupies from 20% to 30% of the volume of the physical-chemical reactor; the coagulation reaction takes place with stirring in the medium, 40rpm on the stirrer (2) shaft; after five minutes the flocculation reaction begins by adding 600ppm to 800ppm of flocculant anionic polymer, with slow stirring, 20 rpm on the shaft of the stirrer (2), to prevent rupture of the flakes formed for 3 (three) minutes; the flocculant anionic polymer promotes the aggregation of the clots and uptake of oils and grease, suspended solids, etc.; the final size of the flake and the final encapsulation of the contaminant is obtained by adding 600 ppm to 1000 ppm of polyacrylamide cationic flocculant polymer, with slow stirring, 20 rpm on the shaft of the stirrer for 3 (three) minutes; the stirrer (2) is switched off and the system rests for forty (40) minutes; due to the formation of carbon gas, the formed flakes float promoting the separation of the medium into two phases, supernatant solids and a gold-yellow colored liquid smelling of ammonium, mainly composed of humates and fulvates having different molecular weights, of ammonium, sodium, iron and chlorides; the physical-chemical reactor (1) is unloaded onto a solid separation ramp, with a grid measuring 0.5mm; the liquid phase contains the solids under 0.5 mm that fall into the flotation tank by dissolved air (3); the centrifugal pump (4) withdraws the liquid phase from the floater; a scraper withdraws the floated solids, the solid phase of the physical-chemical reactor (1) forms a solid substrate which is taken to a dumpster for final disposal in the landfill itself; the dry solid is class II-B and not leach.

The 2^{nd} step is that of filtration and involves a sand filter (5) for retaining coarse solids, a microfiltration (8) with polypropylene cartridges and retention of particles greater than 1 micrometer, for protecting the nanofiltration membrane (9); the post-physical-chemical (liquid phase) effluent is withdrawn from the floater by the centrifugal pump (4) passing through the sand filter (5) and up to the retainate tank (humic substances) (6) of the nanofiltration; a multiple-stage pump (7) having pressure of 1470000 Pa pumps the effluent to pass through the microfiltration (8) and the nanofiltration membrane (9); the retentate from nanofiltration returns to the retainate tank (humic substances) (6) and the permeate follows on to the effluent treatment step; when the temperature of the permeate at the nanofiltration outlet reaches 40°C, the pressures being maintained, the nanofiltration process will be concluded.

The 3^{rd} step of purifying the humic substances; the concentrate from the nanofiltration is rich in organic nitrogen, especially the humic substances, humates and ammonium fulvate, in addition to calcium and sodium with traces of chloride; the nanoretainate is pumped through the high pressure pump (10) to the retainate tank (11) of reverse osmosis, and a high pressure pump pumps the solution by way of an ionic exchange resin column (13), withdrawing the traces of chloride and sodium from the concentrate; after the withdrawal of these ions, this solution of humic substances undergoes the process of reverse osmosis (14) so as to concentrate the humic substances in a volume 20% to 30% of the original volume in the retainate tank (11), and the water produced (permeated) by reverse osmosis (14) is classified as water for re-use; the retainate of the reverse osmosis (14) is a concentrate of humic substances which is raw material for soil conditioners or NPK fertilizer.

The 4^{th} step of treating effluent permeated in the nano filtration; begins by the catalytic oxidation of organic matter having lower molecular weight in the aeration tank (17) with ozone; an ozone generator (15) injects ozone via the Venturi pump (16); the bottom of the tank features air diffusers and a radial compressor blows the air towards the diffusers; the oxidation consists of the *in situ* production of oxygen-reactive species (ORS) such as superoxide anion radical (O₂^{•-}), hydrogen peroxide (H₂O₂), singlet dioxygen (O2), hydroxyl radical (HO•), and the effluent receives from 10g to 20g of ozone (O₃) per cubic meter (m³) of effluent to be oxidized, via Venturi pump (16), furnished by the ozone generator (15); the oxidized effluent having a concentration of Cl⁻ between 1000 mg/l and 2000 mg/l, of Fe³⁺ between 500 mg/l and 1500 mg/l, of Nh₄⁺ between 250 mg/l and 350 mg/l passes through the ammonolysis conduit (18) by cationic reduction.

Ammonolysis by cathodic reduction involves an ammonolysis conduit (18), circulation pump (19), press filter (20); a set of electrodes having graphite cathode and stainless steel anode is mounted inside the conduit and the continuous current source maintains the electric potential difference between 4 volts and 6 volts in the electrodes; ammonolysis is a technique that consists of breaking the nitrogen-hydrogen bonds in the azo groups to increase the valence state of the nitrogen atom up to the formation of molecular nitrogen (N2), with release of H⁺, acidifying the medium; Fe²⁺ present in the medium acts to inhibit the reaction of nucleophilic addition of chloride in organic compounds, pursuant to the kinetic principles below:

Kinetic 1: (anode) Cl⁻ + H₂O -----> ClO⁻+ 2H⁺ + 2e-;

Kinetic 2: (cathode) Fe²⁺ + 2 e⁻ -----> Fe⁰;

Kinetic 3: (decomposition of the ammonium): 3ClO⁻ + 2NH₄⁺ ----> 3Cl⁻ + N₂ + 3H₂O+ 2H⁺; the cathodic ammonolysis reaction will be interrupted when the concentration of ammonium nitrogen reaches 3 mg/l; during ammonolysis the effluent is pumped to pass through a press filter, in which Fe° hydrate is retained and recovered as ferric chloride by the addition of hydrochloric acid and to be re-used in the 1^{st} physical-chemical step; the effluent of the press filter (20) returns to the ammonolysis conduit.

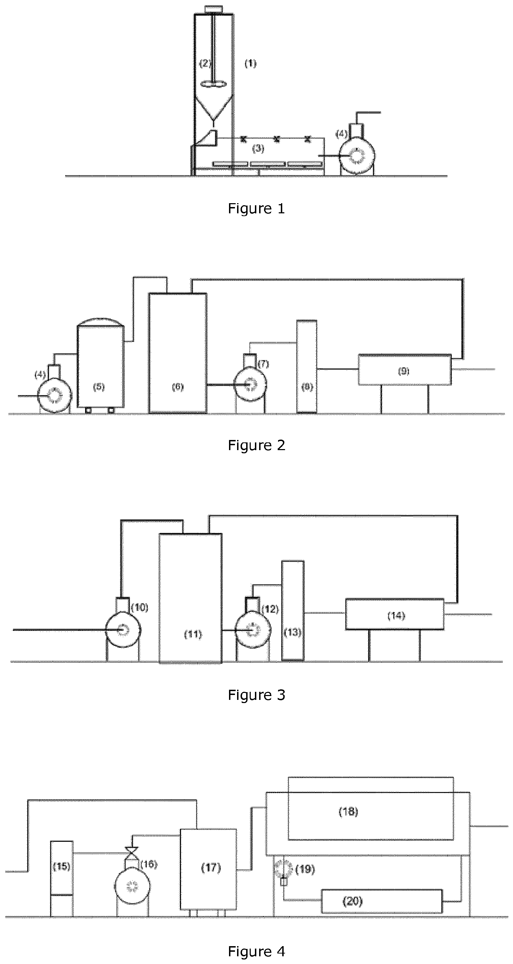

Figure 1 illustrates the equipment involved in the 1^{st} physical-chemical step; physical-chemical reactor (1), stirrer (2), flotation tank by dissolved air and centrifugal pump (4).

Figure 2 illustrates the equipment involved in the 2^{nd} step of filtration; sand filter (5), retainate tank (humic substances) (6), multiple-stage pump (7), microfiltration (8), nanofiltration membrane (9).

Figure 3 illustrates the equipment involved in the 3^{rd} step of purification of the humic substances; high pressure pump (10), ionic exchange resin column (13), pump (12) and reverse osmosis (14).

Figure 4 illustrates the equipment involved in the 4^{th} step of effluent treatment; aeration tank (17), ozone generator (15), Venturi pump (16), ammonolysis conduit (18), circulation pump (19) and press filter (20).

## Claims

1. Process of extracting and purifying humic substances from sanitary landfill leachate comprising the following consecutive steps:
(i) physico-chemical treatment of a slurry, such slurry is inserted into a stirred reactor until 60% of its volume is filled and mixed with ferric chloride from 0.35% to 0.70% by volume of the reactor, said mixture is shaken at 40 rpm for five minutes to coagulate; to the resulting coagulated mixture is added an anionic flocculating polymer, the stirring being maintained at 20 rpm for three minutes, when a cationic flocculating polymer is added and the stirring is maintained at 20 rpm for another three minutes; the resulting mixture rests for forty minutes and is then transferred to a flotation tank by dissolved air;
(ii) filtration of a liquid fraction from the flotation tank in a sand filter, followed by a microfiltration and a nanofiltration resulting in a nanofiltration permeate and a retentate of the nanofiltration;
**characterized by** the fact that it further comprises the steps of:
(iii) purification of humic substances from the retentate of the nanofiltration, wherein said retentate is transferred to a retainate tank, pumped to an ionic exchange resin column, and then routed to a reverse osmosis to obtain water for re-use and concentrated humic substance; and
(iv) effluent treatment wherein the nanofiltration permeate is transferred to an aeration tank and ozone is injected to such tank resulting in an oxidized effluent which is transferred to an ammonolysis conduit where it is subjected to the electric potential difference until reaches the concentration of 3 mg/l of ammonium nitrogen obtaining an effluent, said effluent is then pumped to a press filter for retention of ionic residues, iron and nitrogen.

2. Process of extracting and purifying humic substances from sanitary landfill leachate according to claim 1, **characterized in that** in the flocculation step of the physico-chemical step is added between 600 ppm and 800 ppm of flocculant anionic polymer.

3. Process of extracting and purifying humic substances from sanitary landfill leachate according to claim 1, **characterized in that** in the flocculation step of the physico-chemical step is added between 600 ppm and 1000 ppm of polyacrylamide cationic flocculant polymer.

4. Process of extracting and purifying humic substances from sanitary landfill leachate according to claim 1, **characterized in that** in the microfiltration step particles greater than 1 micrometer are retained.

5. Process of extracting and purifying humic substances from sanitary landfill leachate according to claim 1, **characterized in that** the retentate from nanofiltration returns to the retainate tank.

6. Process of extracting and purifying humic substances from sanitary landfill leachate according to claim 1, **characterized in that** the retainate of the reverse osmosis is a concentrate of humic substances which is raw material for soil conditioners or NPK fertilizer.

7. Process of extracting and purifying humic substances from sanitary landfill leachate according to claim 1, **characterized in that** the aeration tank receives from 10 g to 20 g of ozone (O₃) per cubic meter (m³) of effluent to be oxidized.

8. Process of extracting and purifying humic substances from sanitary landfill leachate according to claim 1, **characterized in that** the reverse osmosis concentrates the humic substances in a volume 20% to 30% of the original volume.

9. Process of extracting and purifying humic substances from sanitary landfill leachate according to claim 1, **characterized in that** the passage conduit comprises electrodes having graphite cathode and stainless steel anode is mounted inside the conduit and the continuous current source maintains the electric potential difference between 4 volts and 6 volts in the electrodes.

10. Process of extracting and purifying humic substances from sanitary landfill leachate according to claim 1, **characterized in that** the effluent of the press filter returns to the ammonolysis conduit.

## Patentansprüche

1. Verfahren zum Extrahieren und Reinigen von Huminstoffen aus dem Sickerwasser von Sanitärdeponien, das in den nachstehenden aufeinanderfolgenden Schritten besteht:
(i) Chemisch-physikalische Behandlung von Schlämmen, die in einen Rührreaktor gegeben werden bis dieser zu 60% gefüllt ist und zu 0,35% bis 0,70% des Reaktorvolumens mit Eisenchlorid gemischt werden, wobei diese Mischung fünf Minuten lang bei 40 U/min gerührt wird bis sie koaguliert; zu der so gewonnenen koagulierten Mischung wird ein anionisches Flockungspolymer gegeben, wobei der Rührvorgang bei 20 U/min für drei Minuten beibehalten wird und hiernach ein kationisches Flockungspolymer hinzugefügt wird und der Rührvorgang bei 20 U/min für weitere drei Minuten beibehalten wird; die so entstandene Mischung ruht für vierzig Minuten und wird dann in ein Druckentspannungs-Flotationsbecken gegeben;
(ii) Filtration eines flüssigen Bruchteils aus dem Flotationsbecken mithilfe eines Sandfilters, gefolgt von einer Mikrofiltration und einer Nanofiltration, was zu einem Permeat der Nanofiltration und einem Retentat der Nanofiltration führt;
und **dadurch gekennzeichnet ist, dass** es außerdem die folgenden Schritte beinhaltet:
(iii) Reinigung der Huminstoffe aus dem Retentat der Nanofiltration, wobei dieses Retentat in ein Rückhaltebecken gegeben, in eine Harz-Ionenaustauschsäule gepumpt und hiernach einer Umkehrosmose zugeführt wird, um wiederverwendbares Wasser und konzentrierte Huminstoffe zu erhalten; und
(iv) Abwasseraufbereitung, wobei das Permeat der Nanofiltration in ein Belebungsbecken gegeben und in dieses Becken Ozon eingeleitet wird und somit oxidiertes Abwasser entsteht, das in eine Amonolyse-Leitung geleitet wird, wo es der elektrischen Potenzialdifferenz ausgesetzt wird bis es eine Konzentration von 3 mg/l Ammoniumstickstoff erreicht und ein Abwasser gewonnen wird, das zur Retention von ionischen Rückständen, Eisen und Stickstoff durch einen Pressfilter gepumpt wird.

2. Verfahren zum Extrahieren und Reinigen von Huminstoffen aus dem Sickerwasser von Sanitärdeponien nach Anspruch 1, **dadurch gekennzeichnet, dass** beim Flockungsschritt des chemisch-physikalischen Schritts zwischen 600 ppm und 800 ppm anionisches Flockungspolymer hinzugegeben wird.

3. Verfahren zum Extrahieren und Reinigen von Huminstoffen aus dem Sickerwasser von Sanitärdeponien nach Anspruch 1, **dadurch gekennzeichnet, dass** beim Flockungsschritt des chemisch-physikalischen Schritts zwischen 600 ppm und 1000 ppm kationisches Polyacrylamid-Flockungspolymer hinzugegeben wird.

4. Verfahren zum Extrahieren und Reinigen von Huminstoffen aus dem Sickerwasser von Sanitärdeponien nach Anspruch 1, **dadurch gekennzeichnet, dass** beim Schritt der Mikrofiltration Partikel mit einer Größe von über 1 Mikrometer zurückgehalten werden.

5. Verfahren zum Extrahieren und Reinigen von Huminstoffen aus dem Sickerwasser von Sanitärdeponien nach Anspruch 1, **dadurch gekennzeichnet, dass** das Retentat der Nanofiltration in das Rückhaltebecken zurückgeleitet wird.

6. Verfahren zum Extrahieren und Reinigen von Huminstoffen aus dem Sickerwasser von Sanitärdeponien nach Anspruch 1, **dadurch gekennzeichnet, dass** das Retentat der Umkehrosmose aus einem Konzentrat aus Huminstoffen besteht, das als Rohmaterial für Bodenverbesserer oder NPK-Düngemittel dient.

7. Verfahren zum Extrahieren und Reinigen von Huminstoffen aus dem Sickerwasser von Sanitärdeponien nach Anspruch 1, **dadurch gekennzeichnet, dass** in das Belebungsbecken 10 bis 20 g Ozon (O₃) pro Kubikmeter (m³) des Abwassers eingeleitet wird um es zu oxidieren.

8. Verfahren zum Extrahieren und Reinigen von Huminstoffen aus dem Sickerwasser von Sanitärdeponien nach Anspruch 1, **dadurch gekennzeichnet, dass** die Umkehrosmose die Huminstoffe auf ein Volumen von 20 bis 30% des ursprünglichen Volumens konzentriert.

9. Verfahren zum Extrahieren und Reinigen von Huminstoffen aus dem Sickerwasser von Sanitärdeponien nach Anspruch 1, **dadurch gekennzeichnet, dass** die Durchflussleitung mit Elektroden mit Grafit-Kathoden und Edelstahl-Anoden versehen ist, die innerhalb der Leitung installiert werden und die Gleichstromquelle eine elektrische Potenzialdifferenz zwischen 4 und 6 Volt an den Elektroden aufweist.

10. Verfahren zum Extrahieren und Reinigen von Huminstoffen aus dem Sickerwasser von Sanitärdeponien nach Anspruch 1, **dadurch gekennzeichnet, dass** das Abwasser aus dem Pressfilter in die Ammonolyse-Leitung zurückgeleitet wird.

## Revendications

1. Procédé d'extraction et de purification de substances humiques à partir de lixiviats de décharges sanitaires comprenant les étapes consécutives suivantes:
(i) traitement physico-chimique d'une boue, laquelle est introduite dans un réacteur agité jusqu'à ce que 60% de son volume soit rempli et mélangé avec du chlorure ferrique de 0,35% à 0,70% en volume du réacteur, ledit mélange est agité à 40 tpm pendant cinq minutes pour coaguler ; un polymère de floculation anionique est ajouté au mélange coagulé résultant, l'agitation étant maintenue à 20 tpm pendant trois minutes, lorsqu'un polymère de floculation cationique est ajouté et l'agitation est maintenue à 20 tpm pendant trois minutes supplémentaires ; le mélange résultant repose pendant quarante minutes et est ensuite transféré dans un réservoir de flottation par de l'air dissous;
(ii) filtration d'une fraction liquide provenant du réservoir de flottation dans un filtre à sable, suivie d'une microfiltration et d'une nanofiltration permettant d'obtenir un perméat de nanofiltration et un rétentat de la nanofiltration;
**caractérisé par le fait qu'**il comprend en outre les étapes de:
(iii) purification de substances humiques à partir du rétentat de la nanofiltration, dans laquelle ledit rétentat est transféré dans un réservoir de retenue, pompé vers une colonne de résine échangeuse d'ions, puis acheminé vers une osmose inverse pour obtenir de l'eau à réutiliser et une substance humique concentrée; et
(iv) traitement des effluents dans lesquels le perméat de nanofiltration est transféré dans un réservoir d'aération, et de l'ozone est injecté dans ce réservoir, provoquant un effluent oxydé qui est transféré dans un conduit d'ammoniolyse où il est soumis à la différence de potentiel électrique jusqu'à ce qu'il atteigne la concentration de 3 mg/l d'azote ammoniacal pour obtenir un effluent, ledit effluent est ensuite pompé vers un filtre-presse pour retenir les résidus ioniques, le fer et l'azote.

2. Procédé d'extraction et de purification de substances humiques à partir de lixiviats de décharges sanitaires selon la revendication 1, **caractérisé en ce que**, lors de l'étape de floculation de l'étape physico-chimique, on ajoute entre 600 ppm et 800 ppm de polymère anionique floculant.

3. Procédé d'extraction et de purification de substances humiques à partir de lixiviats de décharges sanitaires selon la revendication 1, **caractérisé en ce que**, lors de l'étape de floculation de l'étape physico-chimique, on ajoute entre 600 ppm et 1 000 ppm de polymère floculant cationique polyacrylamide.

4. Procédé d'extraction et de purification de substances humiques à partir de lixiviats de décharges sanitaires selon la revendication 1, **caractérisé en ce que**, lors de l'étape de microfiltration, des particules supérieures à 1 micromètre sont retenues.

5. Procédé d'extraction et de purification de substances humiques à partir de lixiviats de décharges sanitaires selon la revendication 1, **caractérisé en ce que**, le rétentat provenant de la nanofiltration retourne dans le réservoir de retenue.

6. Procédé d'extraction et de purification de substances humiques à partir de lixiviats de décharges sanitaires selon la revendication 1, **caractérisé en ce que** le rétentat de l'osmose inverse est un concentré de substances humiques qui est une matière première pour des conditionneurs de sol ou un engrais NPK.

7. Procédé d'extraction et de purification de substances humiques à partir de lixiviats de décharges sanitaires selon la revendication 1, **caractérisé en ce que** le réservoir d'aération reçoit de 10 g à 20 g d'ozone (O₃) par mètre cube (m³) d'effluent à oxyder.

8. Procédé d'extraction et de purification de substances humiques à partir de lixiviats de décharges sanitaires selon la revendication 1, **caractérisé en ce que** l'osmose inverse concentre les substances humiques dans un volume de 20% à 30% du volume initial.

9. Procédé d'extraction et de purification de substances humiques à partir de lixiviats de décharges sanitaires selon la revendication 1, **caractérisé en ce que** le conduit de passage comprend des électrodes équipées d'une cathode en graphite et d'une anode en acier inoxydable installées à l'intérieur du conduit, et la source de courant continu maintient la différence de potentiel électrique entre 4 volts et 6 volts dans les électrodes.

10. Procédé d'extraction et de purification de substances humiques à partir de lixiviats de décharges sanitaires selon la revendication 1, **caractérisé en ce que** l'effluent du filtre-presse retourne dans la conduite d'ammoniolyse.
